# EUROPEAN PATENT SPECIFICATION

(11) **EP 4 287 290 B1**
(45) Date of publication and mention of the grant of the patent: **28.01.2026**
(21) Application number: 21922841.8
(22) Date of filing: 28.01.2021
(51) Int. Cl.: H01M 4/13, H01M 4/64, H01M 10/0565, H01M 10/058, H01M 4/38, H01M 10/052, H01M 4/02

(54) **LITHIUM SECONDARY BATTERY AND METHOD FOR MANUFACTURING SAME**
LITHIUMSEKUNDÄRBATTERIE UND VERFAHREN ZUR HERSTELLUNG DAVON
BATTERIE SECONDAIRE AU LITHIUM ET SON PROCÉDÉ DE FABRICATION

(43) Date of publication of application: 06.12.2023
(73) Proprietor: Terawatt Technology K.K., Yokohama-shi, Kanagawa 226-0026 (JP)
(72) Inventor: ARAI, Juichi, Yokohama-shi, Kanagawa 226-0026 (JP); OGATA, Ken, Yokohama-shi, Kanagawa 226-0026 (JP)
(74) Representative: Mewburn Ellis LLP
(86) International application number: PCT/JP2021/002992
(87) International publication number: WO 2022/162822

(56) References cited:
- EP-A1- 3 407 413
- WO-A1-2019/004699
- JP-A- 2019 145 299
- JP-A- 2019 505 971
- JP-A- 2019 517 722
- JP-A- 2019 537 226
- JP-A- 2020 187 975
- JP-A- 2020 510 292
- JP-A- 2020 524 889
- JP-A- 2020 526 893
- US-A1- 2008 020 280
- US-A1- 2018 351 148

## Description

### Back Ground

### Field

The present invention relates to a lithium secondary battery and a method for manufacturing same.

### Description of Related Art

The technology of converting natural energy such as solar light and window volume into electric energy has recently attracted attentions. Under such a situation, various secondary batteries have been developed as a highly-safe power storage device capable of storing a lot of electric energy.

Among them, lithium secondary batteries which are charged/discharged by the transfer of lithium ions between their positive electrode and negative electrode are known to exhibit a high voltage and a high energy density. As a typical lithium-ion secondary battery, known are lithium-ion secondary batteries having, in the positive electrode and negative electrode thereof, an active material capable of retaining a lithium element therein and performing charge/discharge by delivering or receiving lithium ions between the positive-electrode active material and the negative-electrode active material.

In addition, lithium secondary batteries using, as a negative-electrode active material, a lithium metal instead of a material, such as a carbon-based material, capable of inserting a lithium element have been developed in order to achieve a high-energy density. For example, Patent Document 1 discloses a lithium secondary battery including a lithium metal anode having a thickness of about 10 µm to 20 µm with a view to achieving a volume energy density more than 1000 Wh/L and/or a mass energy density more than 350 Wh/kg at the time when the battery is discharged at at least a rate of 1C at room temperature. Patent Document 1 discloses that such a lithium secondary battery is charged by the direct precipitation, on a lithium metal serving as a negative-electrode active material, of another lithium metal.

With a view to achieving an even higher energy density, improving productivity, and the like, lithium secondary batteries not using a negative-electrode active material have been developed. Patent Document 2 discloses a lithium secondary battery having a positive electrode and a negative electrode, and a separation membrane and an electrolyte interposed therebetween. In the aforesaid negative electrode, metal particles are formed on a negative electrode current collector, transferred from the positive electrode when the battery is charged, and a lithium metal is formed on the negative electrode current collector in the negative electrode. Patent Document 2 discloses that such a lithium secondary battery shows the possibility of providing a lithium secondary battery which overcomes a problem due to the reactivity of a lithium metal and a problem caused during the assembly of a battery and therefore has improved performance and service life. Patent Document 3 discloses an electrolyte including a copolymer. Patent Document 4 discloses a lithium secondary battery comprising an electrolyte, where the electrolyte is a gel polymer electrolyte.

### Patent Documents

Patent Document 1: Published Japanese Translation of PCT application No 2019-517722
Patent Document 2: Published Japanese Translation of PCT application No 2019-505971
Patent Document 3: EP 3407413 A1
Patent Document 4: WO 2019/004699 A1

### Summary

Compared with lithium secondary batteries including a negative electrode having a negative-electrode active material, anode-free lithium secondary batteries including a negative electrode not having a negative-electrode active material as described in the aforesaid Patent Document 2 have a high energy density in principle. Conventional lithium secondary batteries however have still an insufficient energy density so that there is a demand for providing a lithium secondary battery having more improved energy density.

The present invention is made in consideration of the aforesaid problem and a purpose is to provide a lithium secondary battery having a high energy density and a method of manufacturing it.

A method of manufacturing a lithium secondary battery according to the present invention is a method of manufacturing a lithium secondary battery having a positive electrode, a negative electrode, and a separator, including a step of applying a gel electrolyte to one of the surfaces of the separator and a step of forming the negative electrode on the surface of the gel electrolyte, wherein the gel electrolyte comprises a polymer, an electrolyte, and a solvent, wherein the content of the polymer is 5 to 90 parts by mass based on 100 parts by mass of the gel electrolyte, and the content of the electrolyte solution composed of the electrolyte and the solvent is 10 to 95 parts by mass based on 100 parts by mass of the gel electrolyte, characterized in that the negative electrode is thinner than the gel electrolyte and the content of a negative-electrode active material in the negative electrode is 10 mass% or less based on the total amount of negative electrode.

According to such a method of manufacturing a lithium secondary battery, since it uses a negative electrode having a content of a negative-electrode active material in the negative electrode is 10 mass% or less based on the total amount of negative electrode, the lithium secondary battery thus obtained is smaller in entire volume and mass and higher in energy density in principle than a lithium secondary battery having a negative-electrode active material.

By applying a gel electrolyte to one of the surfaces of the separator and forming, on the surface of the gel electrolyte, a negative electrode thinner than the gel electrolyte, a lithium secondary battery thus obtained is lighter than a conventional lithium secondary battery. This is attributed to such a factor that application of a gel electrolyte to one of the surfaces of the separator improves adhesive power between the negative electrode and the separator. Since such an improvement in adhesive power enables the use of a thin negative electrode, which has conventionally been difficult to handle, for the manufacture of a lithium secondary battery, the lithium secondary battery thus obtained has a more excellent energy density. The factor is not limited to the aforesaid one and it will be specifically described later in the description of embodiments

In the aforesaid method of manufacturing a lithium secondary battery, the thickness of the negative electrode is preferably 0.5 µm or more and 6 µm or less. According to such a method, the lithium secondary battery has a more excellent energy density while keeping adhesive power with the gel electrolyte.

The aforesaid gel electrolyte preferably contains at least one selected from the group consisting of polyethylene oxide, polypropylene oxide, polytetrafluoroethylene, polychlorotrifluoroethylene, tetrafluoroethylene/hexafluoropropylene copolymer, vinylidene fluoride/hexafluoropropylene copolymer, tetrafluoroethylene/perfluoro(alkyl vinyl ether) copolymer, tetrafluoroethylene/ethylene copolymer, chlorotrifluoroethylene/ethylene copolymer, polyvinylidene fluoride, and polyvinyl fluoride, and derivatives thereof. The lithium secondary battery obtained according to such a method has improved adhesion due to the gel electrolyte and has more excellent energy density while keeping an electric conductivity between the negative electrode and the separator.

In the aforesaid method of manufacturing a lithium secondary battery, the aforesaid gel electrolyte contains, as a solvent, a compound having at least one of a monovalent group represented by the following formula (A) and a monovalent group represented by the following formula (B). In the following formulas, the wave line represents a bonding site in the monovalent group.

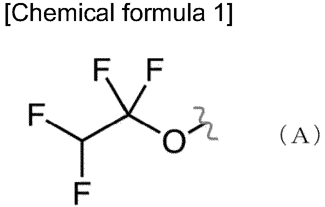

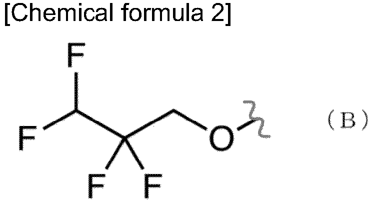

Such a method accelerates formation of a solid electrolyte interface layer (SEI layer) on the surface of the negative electrode so that dendrite growth of a lithium metal on the negative electrode is suppressed and the resulting battery has a more stabilized cycle characteristic.

In the aforesaid method of manufacturing a lithium secondary battery, the gel electrolyte has preferably a thickness of 6 µm or more and 15 µm or less. The lithium secondary battery manufactured using such a method has a more excellent energy density while keeping the adhesion attributable to the gel electrolyte.

The step of forming a negative electrode in the aforesaid method of manufacturing a lithium secondary battery preferably includes a step of attaching, to the surface of the gel electrolyte, a negative material having release paper and a step of removing the release paper. Such a method facilitates the manufacture of a lithium secondary battery including a negative electrode (0.5 µm or more and 6.0 µm or less) thinner than a conventional negative electrode. This owes to such factors that a negative electrode formed on release paper is used to eliminate the need to directly handle a thin negative electrode; and moreover, application of the gel electrolyte to one of the surfaces of the separator improves adhesive power between the negative electrode and the separator, making it easy to peel the negative electrode from the release paper. The negative electrode thus formed is thin and the lithium secondary battery therefore has a more excellent energy density. The factors are however not limited to the aforesaid ones and they will be described later in detail in the description of the embodiments.

The step of forming the negative electrode may be a step of forming the negative electrode on the surface of the gel electrolyte by a vapor deposition method or plating. Using such a method facilitates the manufacture of a lithium secondary battery including a negative electrode (0.5 µm or more to 6.0 µm or less) thinner than a conventional negative electrode, because adhesive power between the negative electrode and the separator is improved by applying a gel electrolyte to one of the surfaces of the separator. Thus, a thin negative electrode is stably formed on the surface of the gel electrolyte and the resulting lithium secondary battery has more excellent energy density.

Preferably, the method of manufacturing a lithium secondary battery according to one embodiment of the present invention further includes a step of applying a positive electrode material containing the gel electrolyte to the other surface of the separator to form the positive electrode. Such a method improves the adhesion between the positive electrode and a positive electrode current collector which will be descried later so that a positive electrode current collector thinner than a conventional positive electrode current collector can be used.

Preferably, the aforesaid method of manufacturing a lithium secondary battery further includes a step of forming a positive electrode current collector having a thickness of 1.0 µm or more and 6.0 µm or less. By such a method, the thickness of the positive electrode current collector can be made thinner so that the lithium secondary battery thus obtained has a more excellent energy density.

The step of forming the positive electrode current collector preferably includes a step of attaching a positive electrode current corrector material having release paper to the surface of the positive electrode and a step of removing the release paper. Such a method facilitates manufacture of a lithium secondary battery including a positive electrode current collector thinner (1.0 µm or more to 6.0 µm) than a conventional positive electrode current collector and the resulting lithium secondary battery has a more excellent energy density.

The step of forming a positive electrode current collector may be a step of forming the positive electrode current collector on the surface of the positive electrode by a vapor deposition method or plating. Such a method facilitates manufacture of a lithium secondary battery including a positive electrode current collector (1.0 µm or more to 6.0 µm) thinner than a conventional positive electrode current collector and the resulting lithium secondary battery has a more excellent energy density.

The aforesaid method of manufacturing a lithium secondary battery preferably manufactures a lithium secondary battery having an energy density of 500 Wh/kg or more.

The aforesaid method of manufacturing a lithium secondary battery preferably manufactures a lithium secondary battery which is charged/discharged by depositing a lithium metal on the surface of the negative electrode and electrolytically dissolving the deposited lithium. The lithium secondary battery obtained by such a method has a more excellent energy density.

The lithium secondary battery according to the present invention has a positive electrode, a negative electrode, and a separator, wherein a gel electrolyte is applied to one of the surfaces of the separator, the negative electrode is formed on the surface of the gel electrolyte, and the negative electrode is thinner than the gel electrolyte. The gel electrolyte comprises a polymer, an electrolyte, and a solvent, wherein the content of the polymer is 5 to 90 parts by mass based on 100 parts by mass of the gel electrolyte, and the content of the electrolyte solution composed of the electrolyte and the solvent is 10 to 95 parts by mass based on 100 parts by mass of the gel electrolyte, and the content of a negative electrode active material in the negative electrode is 10 mass% or less based on the total amount of negative electrode. Such a lithium secondary battery has a higher energy density than a conventional lithium secondary battery because the volume and mass of the negative electrode which account for the entire battery are small.

The thickness of the negative electrode is preferably 0.5 µm or more and 6.0 µm or less. The lithium secondary battery in such a mode has a more excellent energy density.

The aforesaid gel electrolyte preferably contains at least one selected from the group consisting of polyethylene oxide, polypropylene oxide, polytetrafluoroethylene, polychlorotrifluoroethylene, tetrafluoroethylene/hexafluoropropylene copolymer, vinylidene fluoride/hexafluoropropylene copolymer, tetrafluoroethylene/perfluoro(alkyl vinyl ether) copolymer, tetrafluoroethylene/ethylene copolymer, chlorotrifluoroethylene/ethylene copolymer, polyvinylidene fluoride, and polyvinyl fluoride, and derivatives thereof. In such a mode, the negative electrode and the separator show improved adhesion due to the gel electrolyte while keeping the electrical conductivity therebetween so that as the negative electrode, a thinner one may be used and the resulting lithium secondary battery has a more excellent energy density.

In the aforesaid lithium secondary battery, the aforesaid gel electrolyte preferably contains, as a solvent, a compound having at least one of a monovalent group represented by the aforesaid formula I(A) and a monovalent group represented by the aforesaid formula (B). In these formulas, a wave line represents a bonding site in the monovalent group. In such a mode, formation of a solid electrolyte interface layer (SEI layer) on the surface of the negative electrode is accelerated so that the dendrite growth of a lithium metal on the negative electrode is suppressed and the battery thus obtained has a more stabilized cycle characteristic.

The thickness of the gel electrolyte is preferably 6 µm or more and 15 µm or less. In such a mode, the lithium secondary battery thus obtained has a high energy density while keeping adhesion by a gel electrolyte.

In the lithium secondary battery according to one embodiment of the present invention, the positive electrode containing the gel electrolyte is preferably formed on the other surface of the separator. In such a mode, the positive electrode and a positive electrode current collector which will be described later show improved adhesion therebetween so that the positive electrode current collector may be thinner than a conventional positive electrode current collector. The lithium secondary battery thus obtained therefore has a more excellent energy density.

The thickness of the positive electrode current collector is preferably 1.0 µm or more and 6.0 µm or less. In such a mode, the positive electrode current collector becomes even thinner and the lithium secondary battery thus obtained has a more excellent energy density.

The aforesaid lithium secondary battery has preferably an energy density of 500 Wh/kg or more.

### Advantageous Effects of Invention

According to the present invention, a lithium secondary battery having a high energy density and a manufacturing method thereof can be provided.

### Brief Description of Drawings

Fig. 1 is a schematic cross-sectional view of a lithium secondary battery according to a first present embodiment.
Fig. 2 is a flowchart showing a method of the lithium secondary battery.
Fig. 3 is a schematic cross-sectional view of the use of the lithium secondary battery.
Fig. 4 is a schematic cross-sectional view of a lithium secondary battery according to a second present embodiment.

### Detailed Description

The embodiment of the present invention (which will hereinafter be called "present embodiment") will hereinafter be described in detail while referring to the drawings as needed. In the drawings, the same element will be represented by the same reference numeral and an overlapping description will be omitted. Unless otherwise specifically described, the positional relationship such as vertical or horizontal one will be based on the positional relationship shown in the drawings. Further, a dimensional ratio in the drawings is not limited to the ratio shown in the drawings.

### [First present embodiment]

### (Lithium secondary battery)

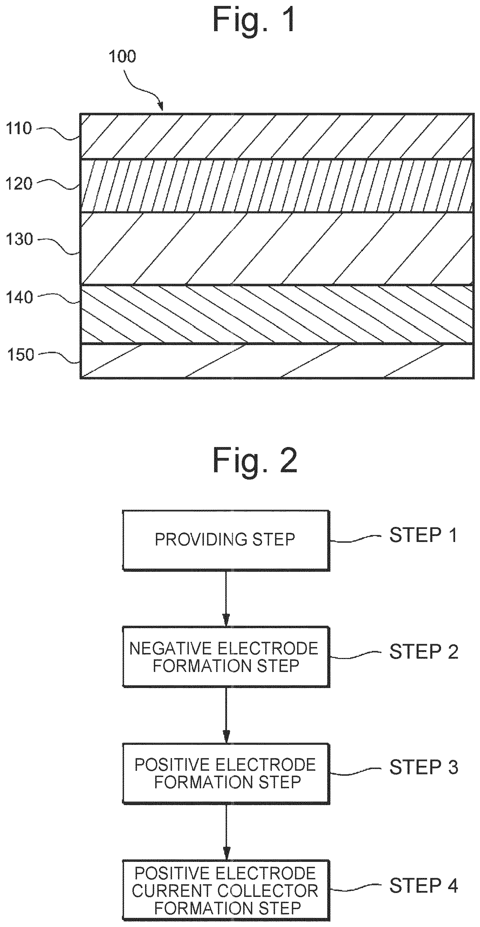

Fig. 1 is a schematic cross-sectional view of a lithium secondary battery 100 according to a first present embodiment. The lithium secondary battery 100 includes a negative electrode 110 not having a negative-electrode active material, a gel electrolyte 120, a separator 130, a positive electrode 140, and a positive electrode current collector 150. The negative electrode 110 and the positive electrode 140 are arranged so that they face to each other via the separator 130. The separator 130 and the negative electrode 110 have therebetween the gel electrolyte 120. This means that the separator 130 has, on one of the surfaces thereof, the gel electrolyte 120 and the separator 130 has, on the other surface thereof, the positive electrode 140. First, details of each component will be described.

### (Negative electrode)

The negative electrode 110 does not have a negative-electrode active material. This means that the negative electrode 110 has neither lithium nor an active material serving as a host of lithium. Compared with a lithium secondary battery including a negative electrode having a negative-electrode active material, the lithium secondary battery 100 is smaller in its entire volume and mass and has a higher energy density in principle. Here, the lithium secondary battery 100 is charged/discharged by depositing a lithium metal on the negative electrode 110 and electrolytically dissolving the deposited lithium metal.

The term "precipitation of a lithium metal on the negative electrode" as used herein means precipitation of a lithium metal on at least one of the surface of the negative electrode, a solid electrolyte interface layer (SEI layer) to be formed on the surface of the negative electrode, which layer will be described later, and the negative electrode 110 coated with a coating agent which will be described later. In the lithium secondary battery of the present embodiment, the lithium metal is presumed to precipitate mainly on the surface of the negative electrode or the surface of the SEI layer, but a precipitation site is not limited thereto.

The term "negative-electrode active material" as used herein means a material for retaining a lithium ion or a lithium metal on the negative electrode 110 and it may be replaced by the term "host material of a lithium element (typically, a lithium metal). Such a retaining mechanism is not particularly limited and examples of it include intercalation, alloying, and occlusion of a metal cluster, typically intercalation.

Such a negative-electrode active material is not particularly limited and examples include lithium metals, alloys containing a lithium metal, carbon-based materials, metal oxides, metals to be alloyed with lithium, and alloys containing the metals. The carbon-based materials are not particularly limited and examples include graphene, graphite, hard carbon, mesoporous carbon, carbon nanotube, and carbon nanohorn. The metal oxides are not particularly limited and examples include titanium oxide-based compounds, tin oxide-based compounds, and cobalt oxide-based compounds. Examples of the metals to be alloyed with lithium include silicon, germanium, tin, lead, aluminum, and gallium.

The term "negative electrode not having a negative-electrode active material" as used herein means that the content of a negative-electrode active material in the negative electrode is 10 mass% or less based on the total amount of the negative electrode. The content of the negative-electrode active material in the negative electrode is preferably 5.0 mass% or less and it may be 1.0 mass% or less, 0.1 mass% or less, or 0.0 mass% or less, each based on the total amount of the negative electrode. When the negative electrode does not have the negative-electrode active material or the content of the negative-electrode active material in the negative electrode falls within the aforesaid range, the lithium secondary battery 100 has a high energy density in principle.

More specifically, regardless of the charged state of the battery, the content of the negative-electrode active material other than a lithium metal in the total amount of the negative electrode 110 is 10 mass% or less and preferably 5.0 mass% or less. It may be 1.0 mass% or less, 0.1 mass% or less, or 0.0 mass% or less. In addition, the content of a lithium metal in the total amount of the negative electrode 110 is 10 mass% or less and preferably 5.0 mass% or less before initial charge and/or after completion of discharge. It may be 1.0 mass% or less, 0.1 mass% or less, or 0.0 mass% or less.

Therefore, the term "lithium secondary battery including a negative electrode not having a negative-electrode active material" may be replaced by an anode-free secondary battery, zero-anode secondary battery, or anode-less secondary battery. The term "lithium secondary battery including a negative electrode not having a negative-electrode active material" may also be replaced by the term "lithium secondary battery including a negative electrode not having a negative-electrode active material other than a lithium metal and not having a lithium metal before initial charge and/or at the time of completion of discharge", the term "lithium secondary battery including a negative electrode current collector not having a lithium metal before initial charge and/or at the time of completion of discharge", the term "lithium secondary battery including a negative electrode comprised of a negative electrode current collector for lithium metal precipitation", or the like. The term "before initial charge and/or at the time of completion of discharge" may be replaced by the term "before initial charge" or "at the time of completion of discharge".

From the viewpoint described above, the lithium secondary battery of the present embodiment has a constitution different from that of a conventional lithium ion battery (LIB) or a lithium metal battery (LMB). The term "lithium ion battery" as used herein means a lithium battery containing, in the negative electrode thereof, a host material for retaining a lithium element in the negative electrode and the term "lithium metal battery" means a lithium battery having, in the negative electrode thereof, a lithium metal foil before initial charge (at the time of assembly of the battery).

The term "before initial charge" of the battery means a state of the battery during a period between the assembly of the battery and first charging. The term "at the time of completion of discharge" of the battery typically means a state where the voltage of the battery is 1.0 V or more and 3.8 V or less (preferably 1.0 V or more and 3.0 V or less).

In the lithium secondary battery 100, a ratio M_{3.0}/M_{4.2}, that is, a ratio of the mass M_{3.0} of a lithium metal precipitated on the negative electrode 110 when the voltage of the battery is 3.0 V to the mass M_{4.2} of a lithium metal precipitated on the negative electrode 110 when the voltage of the battery is 4.2 V is preferably 20% or less, more preferably 15% or less, and still more preferably 10% or less.

In a typical lithium secondary battery, the capacity of a negative electrode (capacity of a negative-electrode active material) and the capacity of a positive electrode (capacity of a positive-electrode active material) are set to be almost equal to each other. In the lithium secondary battery 100, on the other hand, it is not necessary to set the capacity of the negative electrode 110 because it does not have a negative-electrode active material serving as a host material of a lithium element. This means that the lithium secondary battery 100 is not limited by the charge capacity of the negative electrode so that it has a high energy density in principle.

The negative electrode 110 is not particularly limited as long as it does not have a negative-electrode active material and can be used as a current collector. Examples of it include materials composed of at least one selected from the group consisting of Cu, Ni, Ti, and Fe, and other metals that do not react with Li, alloys of them, and stainless steel (SUS). When SUS is used for the negative electrode 110, conventionally known various kinds of SUS may be used. One of the aforesaid negative electrode materials may be used singly or two or more of them may be used in combination. The term "metals that do not react with Li" as used herein means metals that do not react with a lithium ion or a lithium metal to form an alloy under the operation conditions of the lithium secondary battery.

The negative electrode 110 is preferably composed of at least one selected from the group consisting of Cu, Ni, Ti, and Fe, an alloy thereof, and stainless steel (SUS) and more preferably composed of at least one selected from the group consisting of Cu and Ni, an alloy thereof, and stainless steel (SUS). The negative electrode 110 is more preferably Cu or Ni, an alloy thereof, or stainless steel (SUS). By using such a negative electrode, the resulting battery tends to have more excellent energy density and productivity.

The negative electrode 110 is an electrode not containing a lithium metal. Since it is not necessary to use a lithium metal having high flammability and reactivity for the manufacture of the lithium secondary battery 100, the battery thus obtained has excellent safety, productivity, and cycle characteristic.

In the present embodiment, the average thickness of the negative electrode 110 is preferably 0.5 µm or more, more preferably 0.8 µm or more, still more preferably 1.0 µm or more, and still more preferably 1.5 µm or more. The lithium secondary battery having a negative electrode whose average thickness falls within the aforesaid range tends to operate stably. On the other hand, the average thickness of the negative electrode is preferably 6.0 µm or less, more preferably 5.0 µm or less, still more preferably 4.0 µm or less, and still more preferably 3.0 µm or less. The lithium secondary battery 100 manufactured using a negative electrode having such a thickness has a more improved energy density because the volume occupied by the negative electrode 110 in the lithium secondary battery 100 decreases.

In the present embodiment, the thickness can be measured using a known measurement method. For example, measurement is performed by cutting a lithium secondary battery in a thickness direction and observing the exposed cut surface with a scanning electron microscope (SEM) or a transmission electron microscope (TEM).

The "average thickness" and "thickness" in the present embodiment can be found by calculating an arithmetical average of values obtained by measurement three times or more and preferably five times or more.

### (Negative electrode coating agent)

A part or all of the surface of the negative electrode 110 facing the gel electrolyte 120 may be coated with a coating agent. A compound used as the coating agent is not particularly limited and preferred are compounds having an aromatic ring in which two or more elements selected from the group consisting of N, S, and O are bonded independently, in other words, compounds having a structure in which two or more Ns, Ss, or Os are bonded independently to an aromatic ring. Examples of the aromatic ring include aromatic hydrocarbons such as benzene, naphthalene, azulene, anthracene, and pyrene and heteroaromatic compounds such as furan, thiophene, pyrrole, imidazole, pyrazole, pyridine, pyridazine, pyrimidine, and pyrazine. Of these, preferred are the aromatic hydrocarbons, more preferred are benzene and naphthalene, and still more preferred is benzene. One of the aforesaid negative electrode coating agents may be used singly or two or more of them may be used in combination.

A battery obtained by coating the aforesaid compound to the surface of the negative electrode 110 tends to have a more improved cycle characteristic, which is presumed to occur because the aforesaid compound coated on the surface of the negative electrode suppresses uneven precipitation of a lithium metal thereon and suppresses the dendrite growth of a lithium metal to be precipitated on the negative electrode.

### (Gel electrolyte)

The gel electrolyte 120 is a mixture containing a polymer, an electrolyte, and a solvent and it acts as a conductive path of a lithium ion. The gel electrolyte is placed between the negative electrode 110 and the separator 130.

In general, compared with a typical lithium secondary battery, the lithium secondary battery including a negative electrode not having a negative-electrode active material has a small total volume and has a high energy density in principle. The present inventors have however found that if a negative electrode not having a negative-electrode active material is simply used, the negative electrode should have an increased thickness because adhesive power between the negative electrode and the separator is low and a thin negative electrode is hard to handle, and as a result, the battery thus obtained has an increased total weight and total volume and a reduced energy density. As a result of repeating intensive studies, the present inventors have found that arrangement of a gel-like electrolyte (gel electrolyte) between the negative electrode 110 and the separator 130 improves adhesion between the negative electrode 110 and the separator 130, facilitates direct attachment of a thin negative electrode to the gel electrolyte, and provides a lithium secondary battery having a high energy density. It is presumed that as a result of introducing the gel electrolyte 120 and thereby improving adhesion between the negative electrode 110 and the separator 130 without damaging ionic conductivity, a lithium secondary battery thus obtained can operate stably even if the negative electrode 110 even thinner than the gel electrolyte 120 is formed.

The polymer contained in the gel electrolyte 120 is not particularly limited as long as it forms a gel having ionic conductivity and preferred examples include polyethylene oxide, polypropylene oxide, polytetrafluoroethylene, polychlorotrifluoroethylene, vinylidene fluoride/hexafluoropropylene copolymer, tetrafluoroethylene/hexafluoropropylene copolymer, tetrafluoroethylene/perfluoro(alkyl vinyl ether) copolymer, tetrafluoroethylene/ethylene copolymer, chlorotrifluoroethylene/ethylene copolymer, polyvinylidene fluoride, polyvinyl fluoride, nylon-6, polypropylene, and polyvinylidene. More preferred examples include polyethylene oxide, polypropylene oxide, polytetrafluoroethylene, polychlorotrifluoroethylene, tetrafluoroethylene/hexafluoropropylene copolymer, tetrafluoroethylene/perfluoro(alkyl vinyl ether) copolymer, tetrafluoroethylene/ethylene copolymer, chlorotrifluoroethylene/ethylene copolymer, polyvinylidene fluoride, and polyvinyl fluoride. More preferred examples include polyethylene oxide and polypropylene oxide. One of the aforesaid polymers may be used singly or two or more may be used in free combination.

The aforesaid polymer has a smaller specific gravity than a metal foil used as a material of a negative electrode or a positive electrode current collector so that it has a small weight relative to its thickness. Further, a gel electrolyte containing the aforesaid polymer can retain the viscosity and shape of a gel electrolyte more reliably, which facilitates attachment of a thin negative electrode thereto. Therefore, in addition to a small weight of the gel electrolyte 120 itself, the gel electrolyte 120 improves adhesive force between the negative electrode 110 and the separator 130 more and allows the negative electrode 110 to have a smaller thickness so that it is presumed that the lithium secondary battery 100 using the gel electrolyte 120 containing the aforesaid polymer can have a more increased energy density.

The content of the polymer is 5 parts by mass or more and 90 parts by mass or less, such as 15 parts by mass or more and 70 parts by mass or less, or 30 parts by mass or more and 60 parts by mass or less, each based on 100 parts by mass of the gel electrolyte 120. As the polymer, a mixture of two or more of the aforesaid ones is usable. In this case, the content of the polymer mixture may be 5 parts by mass or more and 90 parts by mass or less, 15 parts by mass or more and 70 parts by mass or less, or 30 parts by mass or more and 60 parts by mass or less, each based on 100 parts by mass of the gel electrolyte 120.

The electrolyte contained in the gel electrolyte 120 is not particularly limited as long as it is a salt. Examples include salts of Li, Na, K, Ca, or Mg. As the electrolyte, a lithium salt is preferred. The lithium salt is not particularly limited and examples include Lil, LiCl, LiBr, LiF, LiBF₄, LiPF₆, LiAsF₆, LiSO₃CF₃, LiN(SO₂F)₂, LiN(SO₂CF₃)₂, LiN(SO₂CF₃CF₃)₂, LiBF₂(C₂O₄), LiB(O₂C₂H₄)₂, LiB(O₂C₂H₄)F₂, LiB(OCOCF₃)₄, LiNO₃, and Li₂SO₄. Preferred examples include LiN(SO₂F)₂(LiFSI). One of the aforesaid electrolytes may be used singly or two or more may be used in combination.

The concentration of the electrolyte in the gel electrolyte 120 is not particularly limited and it is preferably 0.5 M or more, more preferably 0.7 M or more, still more preferably 0.9 M or more, and still more preferably 1.0 M or more, each in a solution form not containing the polymer. When the concentration of the electrolyte falls within the aforesaid range, the SEI layer is formed more easily and the internal resistance tends to be lower. The upper limit of the concentration of the electrolyte is not particularly limited and it may be 15.0 M or less, it may be 10.0 M or less, or it may be 5.0 M or less.

As a solvent to be contained in the gel electrolyte, a fluorinated solvent or a non-fluorine solvent may be used. As the fluorinated solvent, a compound having at least either one of a monovalent group represented by the following formula (A) and a monovalent group represented by the following formula (B) is used. In the following formulas, the wave line represents a bonding site of the monovalent group.

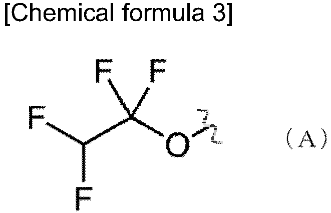

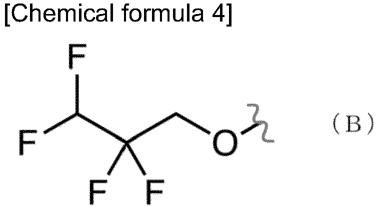

Examples of such a fluorinated solvent include 1,1,2,2-tetrafluoroethyl-2,2,3,3-tetrafluoropropyl ether, 1,1,2,2-tetrafluoroethyl-2,2,2-trifluoroethyl ether, and tetrafluorethyl tetrafluoropropyl ether. Further, usable are fluorinated solvents such as methyl nonafluorobutyl ether, ethyl nonafluorobutyl ether, 1,1,1,2,2,3,4,5,5,5-decafluoro-3-methoxy-4-trifluoromethylpentane, methyl 2,2,3,3,3-pentafluoropropyl ether, 1,1,2,3,3,3-hexafluoropropyl methyl ether, and ethyl 1,1,2,3,3,3-hexafluoropropyl ether. Derivatives of these fluorinated solvents may also be used.

The aforesaid non-fluorine solvent is not particularly limited and examples include dimethyl ether, triethylene glycol dimethyl ether, tetraethylene glycol dimethyl ether, dimethoxyethane, diethylene glycol dimethyl ether, acetonitrile, dimethyl carbonate, diethyl carbonate, ethyl methyl carbonate, ethylene carbonate, propylene carbonate, chloroethylene carbonate, methyl acetonate, ethyl acetate, propyl acetate, methyl propionate, ethyl propionate, trimethyl phosphate, triethyl phosphate, and 12-crown-4. The gel electrolyte may contain, in the aforesaid non-fluorine solvent, at least one hydrogen atom substituted by a fluorine atom. As the non-fluorine solvent and the fluorine-substituted non-fluorine solvent, derivatives of them may be used.

As the aforesaid fluorinated solvent and the non-fluorine solvent, one of them may be used singly or two or more of them may be used in combination at any ratio. A proportion of the content of the fluorinated solvent and that of the non-fluorine solvent are not particularly limited. For example, a proportion of the fluorinated solvent in the whole solvent may be 20 to 100% and a proportion of the non-fluorine solvent in the whole solvent may be 0 to 80%.

The content of the electrolyte solution composed of the aforesaid solvent and electrolyte is, based on 100 parts by mass of the gel electrolyte 120, 10 parts by mass or more and 95 parts by mass or less, such as 30 parts by mass or more and 80 parts by mass or less, or 40 parts by mass or more and 70 parts by mass or less.

The average thickness of the gel electrolyte 120 is preferably 15 µm or less, more preferably 12 µm or less, and still more preferably 10 µm or less. In such a mode, the volume occupied by the gel electrolyte 120 in the lithium secondary battery 100 decreases and the resulting lithium secondary battery 100 has a more improved energy density. The average thickness of the gel electrolyte 120 is preferably 6 µm or more, more preferably 7 µm or more, still more preferably 8 µm or more. In such a mode, adhesive power between the negative electrode 110 and the separator 130 shows more reliable improvement, facilitating attachment of the negative electrode 110. In attaching the negative electrode 110 to the surface of the gel electrolyte 120, the negative electrode 110 formed on release paper may be used.

A filler may be mixed with the aforesaid composition of the gel electrolyte. The filler is not particularly limited and examples include metal oxides such as silica, potassium titanate, and Al₂O₃, metal fluorides such as LiF and AlF₃, metal carbonates such as CaCO₃, metal hydroxides such as Ca(OH)₂ and Mg(OH)₂, nitrides such as AIN and BN, and fibrous materials such as carboxymethyl cellulose and carbon fiber.

The particle shape of the filler is not particularly limited. For example, it may be 5 µm or more and 15 µm or less, 6 µm or more and 10 µm or less, or 7 µm or more and 8 µm or less. The content of the filler is not particularly limited as long as it is within a range not damaging the ionic conductivity and adhesion of the gel electrolyte.

### (Separator)

The separator 130 is a member for securing ionic conductivity of a lithium ion which will be a charge carrier between the positive electrode 140 and the negative electrode 110 while separating the positive electrode 140 from the negative electrode 110 and thereby preventing a short-circuit of the battery. It is composed of a material not having electronic conductivity and not reactive with a lithium ion. The separator 130 also plays a role of retaining the electrolyte solution. The separator 130 is not limited as long as it plays the aforesaid role and it is comprised of, for example, a porous polyethylene (PE) film or a polypropylene (PP) film, or a stacked structure of them.

The separator 130 may be covered with a separator coating layer. The separator coating layer may cover both of the surfaces of the separator 130 or may cover only one of them. The separator coating layer is not particularly limited as long as it is a member having ionic conductivity and not reactive with a lithium ion and it is preferably capable of firmly bonding the separator 130 and a layer adjacent to the separator 130. Such a separator coating layer is not particularly limited and examples of it include members containing a binder such as polyvinylidene fluoride (PVDF), a composite material (SBR-CMC) of styrene butadiene rubber and carboxymethyl cellulose, polyacrylic acid (PAA), lithium polyacrylate (Li-PAA), polyimide (PI), polyamideimide (PAI), or aramid. The separator coating layer may be obtained by adding to the aforesaid binder, inorganic particles such as silica, alumina, titania, zirconia, magnesium oxide, magnesium hydroxide, or lithium nitrate. The separator 130 may be either a separator not having the separator coating layer or a separator having the separator coating layer.

The average thickness of the separator 130 including the separator coating layer is preferably 30 µm or less, more preferably 25 µm or less, and still more preferably 20 µm or less. In such a mode, the volume occupied by the separator 130 in the lithium secondary battery 100 decreases so that the resulting lithium secondary battery 100 has a more improved energy density. The average thickness of the separator 130 is preferably 5 µm or more, more preferably 7 µm or more, and still more preferably 10 µm or more. In such a mode, the positive electrode 140 can be separated from the negative electrode 110 reliably so that the resulting battery can be prevented more from causing a short-circuit.

### (Positive electrode)

The positive electrode 140 is not particularly limited as long as it has a positive-electrode active material and is usually used for a lithium secondary battery. A known material can be selected as needed, depending on the application of the lithium secondary battery. The positive electrode 140 has a positive-electrode active material and therefore has high stability and output voltage.

The term "positive-electrode active material" as used herein means a material for retaining a lithium element (typically, a lithium ion) in the positive electrode 140 and it may be replaced by the term "host material of a lithium element (typically, lithium ion).

Such a positive-electrode active material is not particularly limited and examples include metal oxides and metal phosphates. The metal oxides are not particularly limited and examples include cobalt oxide-based compounds, manganese oxide-based compounds, and nickel oxide-based compounds. The metal phosphates are not particularly limited and examples include iron phosphate-based compounds and cobalt phosphate-based compounds. Examples of a typical positive-electrode active material include LiCoO₂, LiNiₓCo_{y}Mn_{z}O (x+y+z=1), LiNiₓMn_{y}O (x+y=1), LiNiO₂, LiMn₂O₄, LiFePO, LiCoPO, LiFeOF, LiNiOF, and TiS₂. One of the aforesaid positive-electrode active materials may be used singly or two or more of them may be used in combination.

The positive electrode 140 may contain a component other than the aforesaid positive-electrode active material. Such a component is not particularly limited and examples include gel electrolytes, known conductive additives, binders, and inorganic solid electrolytes.

As the gel electrolyte in the positive electrode 140, materials similar to those used for the aforesaid gel electrolyte 120 may be used. In such a mode, due to the function of the gel electrolyte, the adhesive power of the positive electrode and the positive electrode current corrector is improved and the positive electrode current collector can be attached even if it is thin, making it possible to obtain a battery having a more excellent energy density. As a positive electrode current collector to be attached to the surface of the positive electrode, a positive electrode current collector formed on release paper may be used.

The conductive additive to be contained in the positive electrode 140 is not particularly limited and examples include carbon black, single-wall carbon nanotube (SWCNT), multi-wall carbon nanotube (MWCNT), carbon nanofiber (CF), and acetylene black. The binder is not particularly limited and examples include polyvinylidene fluoride, polytetrafluoroethylene, styrene butadiene rubber, acrylic resins, and polyimide resins.

The content of the positive-electrode active material in the total amount of the positive electrode 140 may be, for example, 50 mass% or more and 100 mass% or less. The content of the conductive additive in the total amount of the positive electrode 140 may be, for example, 0.5 mass% or more and 30 mass% or less. The content of the binder in the total amount of the positive electrode 140 may be, for example, 0.5 mass% or more and 30 mass% or less. The content of the gel electrolyte in the total amount of the positive electrode 140 may be, for example, 0.5 mass% or more and 30 mass% or less, preferably 5 mass% or more and 20 mass% or less, and more preferably 8 mass% or more and 15 mass% or less. The content of the inorganic solid electrolyte in the total amount of the positive electrode 140 may be, for example, 0.5 mass% or more and 30 mass% or less.

The average thickness of the positive electrode 140 is preferably 20 µm or more and 100 µm or less, more preferably 30 µm or more and 80 µm or less, and still more preferably 40 µm or more and 70 µm or less.

### (Positive electrode current collector)

The positive electrode 140 has, on one side thereof, a positive electrode current collector 150. The positive electrode current collector is not particularly limited as long as it is a conductor not reactive with a lithium ion in the battery. Examples of such a positive electrode current collector include aluminum. The positive electrode current collector 150 needs not be provided and if so, the positive electrode itself acts as a current collector.

In the present embodiment, the average thickness of the positive electrode current collector is preferably 1 µm or more and 15 µm or less, more preferably 2 µm or more and 10 µm or less, and still more preferably 3 µm or more and 6 µm or less. In such a mode, the volume occupied by the positive electrode current collector 150 in the lithium secondary battery 100 decreases so that the resulting lithium secondary battery 100 has a more improved energy density.

### (Electrolyte solution)

The lithium secondary battery 100 may have an electrolyte solution. In the lithium secondary battery 100, the separator 120 may be wetted with an electrolyte solution or the electrolyte solution may be sealed in a closed vessel with a stacked body of the positive electrode current collector 150, the positive electrode 140, the separator 130, the gel electrolyte 120, and the negative electrode 110. The electrolyte solution is a solution containing an electrolyte and a solvent and having ionic conductivity. It serves as a conductive path of a lithium ion. The battery according to a mode containing the electrolyte solution therefore has a more reduced internal resistance and a more improved energy density, capacity, and cycle characteristic.

The solvent of the electrolyte solution is not particularly limited and it is preferably a solvent similar to that contained in the aforesaid gel electrolyte. Use of the fluorinated solvent contained in the aforesaid gel electrolyte is said to facilitate formation of a solid electrolyte interface layer (SEI layer) having an adequate thickness and high ionic conductivity and therefore, the resulting battery has more improved cycle characteristic. One of the solvents contained in the aforesaid gel electrolyte may be used singly or two or more of them may be used in combination.

The electrolyte to be contained in the electrolyte solution is not particularly limited as long as it is a salt and that contained in the aforesaid gel electrolyte is preferred. The concentration of the electrolyte is not particularly limited and it is preferably 0.5 M or more, more preferably 0.7 M or more, still more preferably 0.9 M or more, and still more preferably 1.0 M or more. When the concentration of the electrolyte falls within the aforesaid range, the SEI layer can be formed more easily and the internal resistance tends to be lower. The upper limit of the concentration of the electrolyte is not particularly limited. The concentration of the electrolyte may be 10.0 M or less, 5.0 M or less, or 2.0 M or less.

### (Method of manufacturing a lithium secondary battery)

A method of manufacturing the lithium secondary battery 100 is not particularly limited as long as it can manufacture a lithium secondary battery including the aforesaid constitution. Examples include the method as shown in Fig. 2. Fig. 2 is a flowchart showing one example of a method of manufacturing the lithium secondary battery 100.

As shown in Fig. 2, constitution members are provided (Step 1). Release paper having, on the surface thereof, a negative electrode (a metal foil, for example, an electrolytic Cu foil) of 0.5 µm or more and 6 µm or less is provided if necessary. A method of forming a negative electrode on release paper may be a known method, for example, vapor deposition method or plating. At this time, the surface of the negative electrode may be subjected to coating treatment if necessary by coating the surface of the negative electrode with the aforesaid coating agent and then drying the resulting surface in the atmosphere

The aforesaid positive electrode material is provided by a known production method or by purchasing a commercially available one. For example, a positive electrode mixture is prepared by mixing the aforesaid positive-electrode active material, the aforesaid gel electrolyte, a known conductive additive, and a known binder. With respect to their mixing ratios, for example, the ratios of the positive-electrode active material, the gel electrolyte, the conductive additive, and the binder in the total amount of the positive electrode mixture may be 50 mass% or more and 99 mass% or less, 0.5 mass% or more and 30 mass% or less, 0.5 mass% or more and 30 mass% or less, and 0.5 mass% or more and 30 mass% or less, respectively.

If necessary, a positive electrode current collector (a metal foil, for example, an Al foil) of a predetermined thickness (for example, 1 µm or more and 6 µm or less, or 1 µm or more and 15 µm or less) which may have release paper is provided. The positive electrode current collector may be formed on release paper by a known method, for example, vapor deposition method or plating.

The separator 130 having the aforesaid constitution is provided. The separator 130 may be produced by a conventionally known method or it may be a commercially available one.

Materials of the gel electrolyte 120 having the aforesaid constitution are provided by a known production method or by purchasing commercially available ones. For example, the aforesaid polymer, the aforesaid solvent, the aforesaid electrolyte, and a known filler are mixed to provide the gel electrolyte 120. The mixing ratios of the polymer, the electrolyte solution containing a solvent and an electrolyte, and the filler may be 5 mass% or more and 50 mass% or less, 5 mass% or more and 70 mass% or less, and 0 mass% or more and 65 mass% or less, respectively, each based on the total amount of the aforesaid gel electrolyte 120.

Next, a negative electrode is formed on one side of the separator 130 (Step 2). First, the gel electrolyte 120 prepared as described above is applied to one of the surfaces of the separator 130. Next, a negative electrode 110 is formed on the surface of the gel electrolyte 120 so that the negative electrode 110 becomes thinner than the gel electrolyte 120.

A method of forming a negative electrode is preferably a method including a step of attaching a negative electrode material having release paper to the surface of the gel electrolyte 120 and a step of removing the release paper. Alternatively, a thin metal film is directly formed on the surface of the gel electrolyte 120 by a vapor deposition method or plating and the resulting metal film may be used as the negative electrode 110.

Next, the positive electrode mixture provided as described above is applied to the other surface (surface on which neither the gel electrolyte nor the negative electrode is formed) of the separator 130 to form a positive electrode (Step 3).

A positive electrode current collector may be formed on the positive electrode (on the surface of the positive electrode 140 not in contact with the separator 130) (Step 4). A method of forming the positive electrode current collector is preferably a method including, for example, a step of attaching the positive electrode current collector having release paper, which current collector is provided as described above, onto the positive electrode and a step of removing the release paper. By this method, a thin positive electrode current collector 150 can be formed on the positive electrode 140. Alternatively, a thin metal film directly formed on the surface of the positive electrode 140 by a vapor deposition method or plating may be used as the positive electrode current collector 150.

The release paper which the negative electrode or the positive electrode current collector may have may be replaced by a film (for example, a polyethylene film or PET film) made of a polymer.

The vapor deposition method in the present embodiment is not particularly limited as long as it can form a negative electrode or a positive electrode current collector having a predetermined thickness and examples include a CVD method, a PVD method, a vacuum deposition method, sputtering, a PLD method, and a metal nanoparticle coating method. A negative electrode or a positive electrode current collector having a desired thickness can be formed by a vapor deposition method while controlling the deposition time and deposition conditions as needed.

The aforesaid plating is not particularly limited as long as it is a method capable of forming a negative electrode or a positive electrode current collector having a predetermined thickness and, for example, electroless plating, electroplating or the like can be used. A negative electrode or a positive electrode current collector having a desired thickness can be formed by plating while controlling the plating time and plating conditions as needed.

By the aforesaid Step 1, Step 2, Step 3, and Step 4, a stacked body as shown in Fig. 1 in which the positive electrode current collector 150, the positive electrode 140, the separator 130, the gel electrolyte 120, and the negative electrode 110 are stacked in order of mention can be obtained. A lithium secondary battery 100 is obtained by sealing the resulting stacked boy in a closed container. The closed container is not particularly limited and examples include a laminate film. To the closed container, the aforesaid electrolyte solution may be added, together with the stacked body.

The aforesaid manufacturing method can manufacture a lithium secondary battery including a negative electrode 110 with a thickness of 0.5 µm or more and 6 µm or less which has conventionally been difficult to manufacture. As a result, the lithium secondary battery thus obtained has a more excellent energy density. In addition, a lithium secondary battery including a positive electrode current collector 150 with a thickness of 1 µm or more and 6 µm or less which has conventionally been difficult to manufacture can be manufactured. As a result, the lithium secondary battery thus obtained has a more excellent energy density.

The procedure of the flowchart shown in Fig. 2 can be changed as needed as long as the lithium secondary battery 100 can be manufactured according to it. For example, in the providing step (Step 1) of constituent members, the providing order of them may be interchanged or they may be provided simultaneously. Alternatively, they may be provided immediately before the stacking step of the constituents. The negative electrode formation step and the positive electrode formation step (and the positive electrode current collector formation step) may be interchanged in order.

### (Use of a lithium secondary battery)

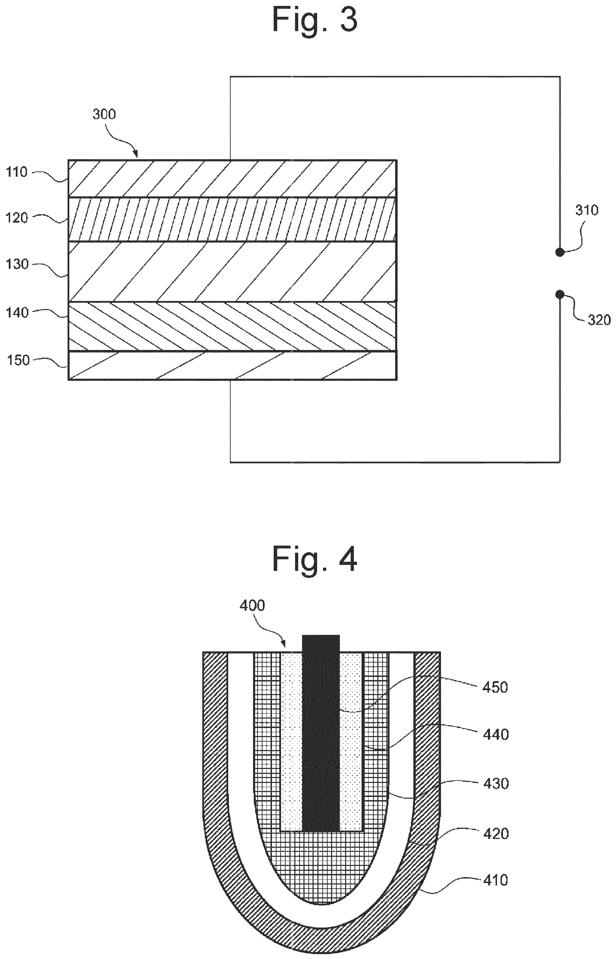

Fig. 3 shows one use mode of the lithium secondary battery of the present embodiment. In the lithium secondary battery 300, a positive electrode terminal 320 and a negative electrode terminal 310 for connecting the lithium secondary battery 100 to an external circuit are bonded to the positive electrode current collector 150 and the negative electrode 110, respectively. The lithium secondary battery 300 is charged/discharged by connecting the negative electrode terminal 310 to one end of the external circuit and connecting the positive electrode terminal 320 to the other end of the external circuit.

The lithium secondary battery 300 is charged by applying a voltage between the negative electrode terminal 310 and the positive electrode terminal 320 to cause an electric current to flow from the negative electrode terminal 310 to the positive electrode terminal 320 through the external circuit. By charging the lithium secondary battery 300, a lithium metal precipitates on the negative electrode.

In the lithium secondary battery 300, first charge (initial charge) after the assembly of the battery may form a solid electrolyte interface layer (SEI layer) on the surface (interface between the negative electrode 110 and the gel electrolyte 120) of the negative electrode 110. The SEI layer to be formed is not particularly limited and it may contain, for example, an inorganic compound containing lithium, an organic compound containing lithium, or the like. The typical average thickness of the SEI layer is 1 nm or more and 10 µm or less.

With respect to the lithium secondary battery 300 after charging, the lithium secondary battery 300 is discharged when the negative electrode terminal 310 and the positive electrode terminal 320 are connected. This discharge electrolytically dissolves the lithium metal precipitated on the negative electrode.

### [Second Embodiment]

(Lithium secondary battery)

Fig. 4 is a schematic cross-sectional view of a lithium secondary battery according to second present embodiment. The lithium secondary battery 400 of the second present embodiment having a substantially columnar shape includes, from the center portion thereof outward, a positive electrode current collector 450, a positive electrode 440, a separator 430, a gel electrolyte 420, and a negative electrode 410 not having a negative-electrode active material.

The constitution and preferred modes of the positive electrode current collector 450, the positive electrode 440, the separator 430, the gel electrolyte 420, and the negative electrode 410 are similar to those of the lithium secondary battery 100 of the first present embodiment and the lithium secondary battery 400 has an advantageous effect similar to that of the lithium secondary battery 100. The lithium secondary battery 400 may include such an electrolyte solution as the lithium secondary battery 100 includes. Since the negative electrode 410 is sufficiently thin, it may be easily folded into such a shape as shown in the drawing.

### [Modification Example]

The aforesaid present embodiment is an example for describing the present invention.

For example, the lithium secondary battery 100 of the first present embodiment may have a gel electrolyte 120 on both surfaces of the negative electrode 110 and it may have a positive electrode current collector, a positive electrode, a separator, a gel electrolyte, a negative electrode, a gel electrolyte, a separator, a positive electrode, and a positive electrode current collector stacked in order of mention constituent member (the constituent member may be comprised of a plurality of layers). In such a mode, the lithium secondary battery can have a more improved capacity.

In the lithium secondary battery of the present embodiment, a terminal may be attached to the positive electrode current collector and/or the negative electrode for connecting it to an external circuit. For example, a metal terminal (for example, Al or Ni) having a length of 10 µm or more and 1 mm or less may be bonded to one or both of the positive electrode current collector and the negative electrode. Bonding may be performed by a conventionally known method, for example, ultrasonic welding.

The term "has a high energy density" or "having a high energy density" as used herein means that the capacity of a battery per total volume or total mass is high and it is preferably 1000 Wh/L or more or 500 Wh/kg or more, more preferably 1100 Wh/L or more or 550 Wh/kg or more.

The term "having an excellent cycle characteristic" as used herein means that a decreasing ratio of the capacity of a battery is small before and after the expected number of charging/discharging cycles in ordinary use. Described specifically, it means that when a first discharge capacity after initial charge and a discharge capacity after the number of charging/discharging cycles expected in ordinary use are compared, the discharge capacity after charging/discharging cycles shows almost no decrease compared with the first discharge capacity after initial charge.

### Examples

The present invention will hereinafter be described more specifically by Examples and Comparative Examples. The present invention is not limited at all by the following Examples.

### [Example 1]

A lithium secondary battery was manufactured as described below.

First, a commercially-available 2-µm thick electrolytic Cu foil having release paper was prepared.

As a separator, a polyethylene microporous film separator having a thickness of 12 µm was provided.

After dimethoxyethane (DME) and 1,1,2,2-tetrafluoroethyl-2,2,3,3-tetrafluoropropyl ether (TTFE) were mixed to give their volumetric ratio of 2:8, respectively, LiN(SO₂F)₂(LiFSI) was dissolved to obtain a 1.2 M solution. The resulting solution was mixed with an equal part by mass of polyethylene oxide (electrolyte solution : polyethylene oxide = 1:1) to prepare a gel electrolyte. The gel electrolyte thus obtained was applied onto a separator to form a 10-µm thick gel electrolyte on the separator. To the surface (the surface on the side opposite to the separator) of the gel electrolyte thus formed, the 2-µm thick negative electrode having release paper, which had been prepared above, was attached. By removing the release paper, the gel electrolyte had, on the surface thereof, a 2-µm thick negative electrode.

Next, 86 parts by mass of LiNi_{0.85}Co_{0.12}Al_{0.03}O₂ as a positive-electrode active material, 1 part by mass of a carbon nanotube (CNT) as a conductive additive, and 3 parts by mass of polyvinylidene fluoride (PVDF) as a binder were mixed and the resulting mixture was mixed with 10 parts by mass of the aforesaid gel electrolyte. The mixture thus obtained was applied onto the surface of a separator having no negative electrode thereon to form a positive electrode on the separator. A 12-µm thick Al foil was attached to the surface (surface on the side opposite to the separator) of the positive electrode to form a 12 µm-thick positive electrode current collector on the surface of the positive electrode.

In such a manner, a stacked body having the positive electrode current collector, the positive electrode, the separator, the gel electrolyte, and the negative electrode stacked in order of mention was obtained. Then, a 100-µm Al terminal and a 100-µm Ni terminal were bonded to the positive electrode current collector and the negative electrode, respectively, by ultrasonic welding, followed by insertion and sealing of the resulting bonded body in a laminate-film outer container to obtain a lithium secondary battery.

### [Example 2]

In a manner similar to that of Example 1 except that a 3-µm thick Al foil serving as a positive electrode current collector was attached using release paper, a lithium secondary battery was obtained. The positive electrode current collector was formed on the positive electrode as follows. First, a 3-µm thick Al foil having release paper, which had been provided in advance, was attached to the surface of the thus formed positive electrode (surface of the positive electrode on the side opposite to the separator). Then, the release paper was removed to form a 3-µm thick positive electrode current collector on the surface of the positive e electrode.

### [Comparative Example]

A negative electrode and a positive electrode were formed as described below and a gel electrolyte was not prepared.

The negative electrode was formed by washing an 8-µm thick electrolytic Cu foil with a sulfamic acid-containing solvent, ultrasonically washing the resulting foil with ethanol, and the drying it.

Next, the positive electrode was formed. A mixture obtained by mixing 96 parts by mass of LiNi_{0.85}Co_{0.12}Al_{0.03}O₂ as a positive-electrode active material, 2 parts by mass of carbon black as a conductive additive, and 2 parts by mass of polyvinylidene fluoride (PVDF) as a binder was applied to one of the surfaces of a 12-µm Al foil and then, they were press-molded. The molded product thus obtained was punched into a predetermined size to obtain the positive electrode.

The separator was provided as in Example 1.

The electrolyte solution was provided by mixing dimethoxyethane (DME) and 1,1,2,2-tetrafluoroethyl-2,2,3,3-tetrafluoropropyl ether (TTFE) at a volumetric ratio of 2:8 and thereby obtaining a solvent and dissolving LiN(SO₂F)₂(LiFSI) in the resulting solvent to obtain a 1.2 M solution.

The positive electrode current collector having the positive electrode formed thereon, the separator, and the negative electrode, each thus obtained, were stacked in order of mention so that the positive electrode faced the separator. Then, as in Example 1, a 100-µm Al terminal and a 100-µm Ni terminal were bonded by ultrasonic welding to the positive electrode current collector and the negative electrode, respectively, and then the resulting bonded body was inserted into a laminate-film outer container. Then, after the electrolyte solution prepared as described above was poured in the external container, the resulting external container was sealed to obtain a lithium secondary battery not having a gel electrolyte.

### [Evaluation of energy density]

The energy density of the lithium secondary batteries formed in Examples and Comparative Example was evaluated. An energy density (Wh/kg) is a value obtained by dividing the product of a charge/discharge capacity and an average discharge voltage of each of the thus-formed lithium secondary batteries by the total weight of the battery. The higher the energy density, the more excellent the performance of the battery.

**[Table 1]**

| | | Ex. 1 | Ex. 2 | Comp. Ex. |
|---|---|---|---|---|
| Thickness of negative electrode | (µm) | 2 | 2 | 8 |
| Thickness of gel electrolyte | (µm) | 10 | 10 | - |
| Thickness of positive electrode current collector | (µm) | 12 | 3 | 12 |
| Charge/discharge capacity | (mAh) | 100 | 100 | 105 |
| Average discharge voltage | (V) | 3.8 | 3.8 | 3.8 |
| Total weight | (mg) | 760 | 671 | 960 |
| Energy density | (Wh/kg) | 500 | 566 | 416 |

The lithium secondary batteries manufactured in Examples 1 and 2 by the manufacturing method of the present embodiment were charged/discharged stably even when the thickness of the negative electrode was set at 0.5 µm or more and 6.0 µm or less. As shown in Table 1, the lithium secondary batteries obtained in Examples 1 and 2 each had an energy density of 500 Wh/kg or more, meaning that they had a higher energy density that that obtained in Comparative Example.

### Industrial Applicability

The present invention makes it possible to provide a lithium secondary battery having a high energy density so that the manufacturing method of the present invention has industrial applicability as a method of manufacturing a power storage device to be used for various purposes.

### Reference Signs List

100, 300, 400...lithium secondary battery.
110, 410... negative electrode not having a negative-electrode active material.
120, 420...gel electrolyte.
130, 430...separator.
140, 440...positive electrode.
150, 450... positive electrode current collector.
310...negative electrode terminal.
320...positive electrode terminal.

## Claims

1. A method of manufacturing a lithium secondary battery (100) comprising a positive electrode (140), a negative electrode (110) and a separator (130), comprising:
a step of applying a gel electrolyte (120) to one of the surfaces of the separator, and
a step of forming the negative electrode on the surface of the gel electrolyte, wherein:
the gel electrolyte comprises a polymer, an electrolyte, and a solvent, wherein the content of the polymer is 5 to 90 parts by mass based on 100 parts by mass of the gel electrolyte, and the content of the electrolyte solution composed of the electrolyte and the solvent is 10 to 95 parts by mass based on 100 parts by mass of the gel electrolyte,
**characterized in that** the negative electrode is thinner than the gel electrolyte and the content of a negative-electrode active material in the negative electrode is 10 mass% or less based on the total amount of negative electrode.

2. The method of manufacturing a lithium secondary battery (100) according to Claim 1, wherein the negative electrode (110) has a thickness of 0.5 µm or more and 6.0 µm or less.

3. The method of manufacturing a lithium secondary battery (100) according to Claim 1 or 2, wherein the gel electrolyte (120) comprises at least one selected from the group consisting of polyethylene oxide, polypropylene oxide, polytetrafluoroethylene, polychlorotrifluoroethylene, tetrafluoroethylene/hexafluoropropylene copolymer, vinylidene fluoride/hexafluoropropylene copolymer, tetrafluoroethylene/perfluoro(alkyl vinyl ether) copolymer, tetrafluoroethylene/ethylene copolymer, chlorotrifluoroethylene/ethylene copolymer, polyvinylidene fluoride, and polyvinyl fluoride, and derivatives thereof.

4. The method of manufacturing a lithium secondary battery (100) according to any one of Claims 1 to 3, wherein the gel electrolyte (120) comprises, as a solvent, a compound selected from the group consisting of 1,1,2,2-tetrafluoroethyl-2,2,3,3-tetrafluoropropyl ether, 1,1,2,2-tetrafluoroethyl-2,2,2-trifluoroethyl ether, tetrafluoroethyl tetrafluoropropyl ether, methyl nonafluorobutyl ether, ethyl nonafluorobutyl ether, 1,1,1,2,2,3,4,5,5,5-decafluoro-3-methoxy-4-trifluoromethylpentane, methyl 2,2,3,3,3-pentrafluoropropyl ether, 1,1,2,3,3,3-hexafluoropropyl methyl ether, and ethyl 1,1,2,3,3,3-hexafluoropropyl ether.

5. The method of manufacturing a lithium secondary battery (100) according to any one of Claims 1 to 4, wherein the gel electrolyte (120) has a thickness of 6 µm or more and 15 µm or less.

6. The method of manufacturing a lithium secondary battery (100) according to any one of Claims 1 to 5, wherein the step of forming the negative electrode (110) comprises a step of attaching a negative electrode material having release paper to the surface of the gel electrolyte (120) and a step of removing the release paper.

7. The method of manufacturing a lithium secondary battery (100) according to any one of Claims 1 to 5, wherein the step of forming the negative electrode (110) is a step of forming the negative electrode on the surface of the gel electrolyte (120) by a vapor deposition method or plating.

8. The method of manufacturing a lithium secondary battery (100) according to any one of Claims 1 to 7, further comprising a step of applying a positive electrode material containing the gel electrolyte to the other surface of the separator to form the positive electrode (140).

9. The method of manufacturing a lithium secondary battery (100) according to Claim 8, further comprising a step of forming a positive electrode current collector (150) having a thickness of 1.0 µm or more and 6.0 µm or less on a surface of the positive electrode.

10. The method of manufacturing a lithium secondary battery (100) according to Claim 9, wherein the step of forming the positive electrode current collector (150) comprises a step of attaching a positive electrode current collector material having release paper to the surface of the positive electrode and a step of removing the release paper.

11. The method of manufacturing a lithium secondary battery (100) according to Claim 9, wherein the step of forming the positive electrode current collector (150) is a step of forming the positive electrode current collector on the surface of the positive electrode (140) by a vapor deposition method or plating.

12. A lithium secondary battery (100) comprising a positive electrode, a negative electrode (110) and a separator (130), wherein:
the separator has, on one of surfaces thereof, a gel electrolyte (120) formed by application, wherein the gel electrolyte comprises a polymer, an electrolyte, and a solvent, and the content of the polymer is 5 to 90 parts by mass based on 100 parts by mass of the gel electrolyte, and the content of the electrolyte solution composed of the electrolyte and the solvent is 10 to 95 parts by mass based on 100 parts by mass of the gel electrolyte,
the gel electrolyte has, on a surface thereof, the negative electrode, and
**characterized in that** the negative electrode is thinner than the gel electrolyte and the content of a negative-electrode active material in the negative electrode is 10 mass% or less based on the total amount of negative electrode.

13. The lithium secondary battery (100) according to Claim 12, wherein the negative electrode (110) has a thickness of 0.5 µm or more and 6.0 µm or less.

14. The lithium secondary battery (100) according to Claim 12 or 13, wherein the gel electrolyte (120) comprises at least one selected from the group consisting of polyethylene oxide, polypropylene oxide, polytetrafluoroethylene, polychlorotrifluoroethylene, tetrafluoroethylene/hexafluoropropylene copolymer, vinylidene fluoride/hexafluoropropylene copolymer, tetrafluoroethylene/perfluoro(alkyl vinyl ether) copolymer, tetrafluoroethylene/ethylene copolymer, chlorotrifluoroethylene/ethylene copolymer, polyvinylidene fluoride, and polyvinyl fluoride, and derivatives thereof.

15. The lithium secondary battery (100) according to any one of Claims 12 to 14, wherein the gel electrolyte (120) contains, as a solvent, a compound selected from the group consisting of 1,1,2,2-tetrafluoroethyl-2,2,3,3-tetrafluoropropyl ether, 1,1,2,2-tetrafluoroethyl-2,2,2-trifluoroethyl ether, tetrafluoroethyl tetrafluoropropyl ether, methyl nonafluorobutyl ether, ethyl nonafluorobutyl ether, 1,1,1,2,2,3,4,5,5,5-decafluoro-3-methoxy-4-trifluoromethylpentane, methyl 2,2,3,3,3-pentrafluoropropyl ether, 1,1,2,3,3,3-hexafluoropropyl methyl ether, and ethyl 1,1,2,3,3,3-hexafluoropropyl ether.

16. The lithium secondary battery (100) according to any one of Claims 12 to 15, wherein the gel electrolyte (120) has a thickness of 6 µm or more and 15 µm or less.

17. The lithium secondary battery (100) according to any one of Claims 12 to 16, wherein the separator (130) has, on the other surface thereof, a positive electrode (140) containing the gel electrolyte (120).

18. The lithium secondary battery (100) according to Claim 17, further comprising a positive electrode current collector (150) having a thickness of 1.0 µm or more to 6.0 µm or less on the positive electrode (140) containing the gel electrolyte (120).

## Patentansprüche

1. Verfahren zur Herstellung eines Lithium-Akkumulators (100), der eine positive Elektrode (140), eine negative Elektrode (110) und ein Trennelement (130) umfasst, das Folgendes umfasst:
einen Schritt des Aufbringens eines Gel-Elektrolyten (120) auf eine der Oberflächen des Trennelements und
einen Schritt des Ausbildens der negativen Elektrode auf der Oberfläche des Gel-Elektrolyten, wobei:
der Gel-Elektrolyt ein Polymer, einen Elektrolyten und ein Lösungsmittel umfasst, wobei der Gehalt des Polymers 5 bis 90 Massenteile, bezogen auf 100 Massenteile des Gel-Elektrolyten, beträgt und der Gehalt der Elektrolyt-Lösung, die aus dem Elektrolyten und dem Lösungsmittel zusammengesetzt ist, 10 bis 95 Massenteile, bezogen auf 100 Massenteile des Gel-Elektrolyten, beträgt,
**dadurch gekennzeichnet, dass** die negative Elektrode dünner als der Gel-Elektrolyt ist und der Gehalt eines aktiven Materials der negativen Elektrode in der negativen Elektrode 10 Massen-% oder weniger, bezogen auf die gesamte Menge der negativen Elektrode, beträgt.

2. Verfahren zur Herstellung eines Lithium-Akkumulators (100) nach Anspruch 1, wobei die negative Elektrode (110) eine Dicke von 0,5 µm oder mehr und 6,0 µm oder weniger aufweist.

3. Verfahren zur Herstellung eines Lithium-Akkumulators (100) nach Anspruch 1 oder 2, wobei der Gel-Elektrolyt (120) zumindest eines aus der aus Polyethylenoxid, Polypropylenoxid, Polytetrafluorethylen, Polychlortrifluorethylen, Tetrafluorethylen/Hexafluorpropylen-Copolymer, Vinylidenfluorid/Hexafluorpropylen-Copolymer, Tetrafluorethylen/Perfluor(alkylvinylether)-Copolymer, Tetrafluorethylen/Ethylen-Copolymer, Chlortrifluorethylen/EthylenCopolymer, Polyvinylidenfluorid und Polyvinylfluorid und Derivaten davon bestehenden Gruppe umfasst.

4. Verfahren zur Herstellung eines Lithium-Akkumulators (100) nach einem der Ansprüche 1 bis 3, wobei der Gel-Elektrolyt (120) als Lösungsmittel eine aus der aus 1,1,2,2-Tetrafluorethyl-2,2,3,3-tetrafluorpropylether, 1,1,2,2-Tetrafluorethyl-2,2,2-trifluorethylether, Tetrafluorethyltetrafluorpropylether, Methylnonafluorbutylether, Ethylnonafluorbutylether, 1,1,1,2,2,3,4,5,5,5-Decafluor-3-methoxy-4-trifluormethylpentan, Methyl-2,2,3,3,3-pentafluor-propylether, 1,1,2,3,3,3-Hexafluorpropylmethylether und Ethyl-1,1,2,3,3,3-hexafluorpropyl-ether bestehenden Gruppe ausgewählte Verbindung umfasst.

5. Verfahren zur Herstellung eines Lithium-Akkumulators (100) nach einem der Ansprüche 1 bis 4, wobei der Gel-Elektrolyt (120) eine Dicke von 6 µm oder mehr und 15 µm oder weniger aufweist.

6. Verfahren zur Herstellung eines Lithium-Akkumulators (100) nach einem der Ansprüche 1 bis 5, wobei der Schritt des Ausbildens der negativen Elektrode (110) einen Schritt des Befestigens von Material der negativen Elektrode, das Trennpapier aufweist, an der Oberfläche des Gel-Elektrolyten (120) und einen Schritt des Entfernens des Trennpapiers umfasst.

7. Verfahren zur Herstellung eines Lithium-Akkumulators (100) nach einem der Ansprüche 1 bis 5, wobei der Schritt des Ausbildens der negativen Elektrode (110) ein Schritt des Ausbildens der negativen Elektrode auf der Oberfläche des Gel-Elektrolyten (120) durch ein Dampfabscheidungsverfahren oder Plattieren ist.

8. Verfahren zur Herstellung eines Lithium-Akkumulators (100) nach einem der Ansprüche 1 bis 7, das weiters einen Schritt des Aufbringens von Material der positiven Elektrode, das den Gel-Elektrolyten enthält, auf der anderen Oberfläche des Trennelements, um die positive Elektrode (140) auszubilden, umfasst.

9. Verfahren zur Herstellung eines Lithium-Akkumulators (100) nach Anspruch 8, das weiters einen Schritt des Ausbildens eines Stromsammlers für die positive Elektrode (150), der eine Dicke von 1,0 µm oder mehr und 6,0 µm oder weniger aufweist, auf einer Oberfläche der positiven Elektrode umfasst.

10. Verfahren zur Herstellung eines Lithium-Akkumulators (100) nach Anspruch 9, wobei der Schritt des Ausbildens des Stromsammlers für die positive Elektrode (150) einen Schritt des Befestigens eines Materials des Stromsammlers für die positive Elektrode, das Trennpapier aufweist, an der Oberfläche der positiven Elektrode und einen Schritt des Entfernens des Trennpapiers umfasst.

11. Verfahren zur Herstellung eines Lithium-Akkumulators (100) nach Anspruch 9, wobei der Schritt des Ausbildens des Stromsammlers für die positive Elektrode (150) ein Schritt des Ausbildens des Stromsammlers für die positive Elektrode auf der Oberfläche der positiven Elektrode (140) durch ein Dampfabscheidungsverfahren oder Plattieren ist.

12. Lithium-Akkumulator (100), der eine positive Elektrode, eine negative Elektrode (110) und ein Trennelement (130) umfasst, wobei:
das Trennelement auf einer seiner Oberflächen einen Gel-Elektrolyten (120) aufweist, der durch Aufbringen ausgebildet ist, wobei der Gel-Elektrolyt ein Polymer, einen Elektrolyten und ein Lösungsmittel umfasst und der Gehalt des Polymers 5 bis 90 Massenteile, bezogen auf 100 Massenteile des Gel-Elektrolyten, beträgt und der Gehalt der Elektrolytlösung, die aus dem Elektrolyten und dem Lösungsmittel zusammengesetzt ist, 10 bis 95 Massenteile, bezogen auf 100 Massenteile des Gel-Elektrolyten, beträgt,
der Gel-Elektrolyt auf einer seiner Oberflächen die negative Elektrode aufweist und
**dadurch gekennzeichnet, dass** die negative Elektrode dünner als der Gel-Elektrolyt ist und der Gehalt eines aktiven Materials der negativen Elektrode in der negativen Elektrode 10 Massen-% oder weniger, bezogen auf die gesamte Menge der negativen Elektrode, beträgt.

13. Lithium-Akkumulator (100) nach Anspruch 12, wobei die negative Elektrode (110) eine Dicke von 0,5 µm oder mehr und 6,0 µm oder weniger aufweist.

14. Lithium-Akkumulator (100) nach Anspruch 12 oder 13, wobei der Gel-Elektrolyt (120) zumindest eines aus der aus Polyethylenoxid, Polypropylenoxid, Polytetrafluorethylen, Polychlortrifluorethylen, Tetrafluorethylen/Hexafluorpropylen-Copolymer, Vinylidenfluorid/Hexafluorpropylen-Copolymer, Tetrafluorethylen/Perfluor(alkylvinylether)-Copolymer, Tetrafluorethylen/Ethylen-Copolymer, Chlortrifluorethylen/Ethylen-Copolymer, Polyvinylidenfluorid und Polyvinylfluorid und Derivaten davon bestehenden Gruppe umfasst

15. Lithium-Akkumulator (100) nach einem der Ansprüche 12 bis 14, wobei der Gel-Elektrolyt (120) als Lösungsmittel eine aus der aus 1,1,2,2-Tetrafluorethyl-2,2,3,3-tetrafluor-propylether, 1,1,2,2-Tetrafluorethyl-2,2,2-trifluorethylether, Tetrafluorethyltetrafluorpropylether, Methylnonafluorbutylether, Ethylnonafluorbutylether, 1,1,1,2,2,3,4,5,5,5-Decafluor-3-methoxy-4-trifluormethylpentan, Methyl-2,2,3,3,3-pentafluorpropylether, 1,1,2,3,3,3-Hexafluorpropylmethylether und Ethyl-1,1,2,3,3,3-hexafluorpropylether bestehenden Gruppe ausgewählte Verbindung umfasst.

16. Lithium-Akkumulator (100) nach einem der Ansprüche 12 bis 15, wobei der Gel-Elektrolyt (120) eine Dicke von 6 µm oder mehr und 15 µm oder weniger aufweist.

17. Lithium-Akkumulator (100) nach einem der Ansprüche 12 bis 16, wobei das Trennelement (130) auf seiner anderen Oberfläche eine positive Elektrode (140) aufweist, die den Gel-Elektrolyten (120) enthält.

18. Lithium-Akkumulator (100) nach einem der Anspruch 17, der weiters einen Stromsammler für die positive Elektrode (150), der eine Dicke von 1,0 µm oder mehr und 6,0 µm oder weniger aufweist, auf der positiven Elektrode (140), die den Gel-Elektrolyten (120) enthält, umfasst.

## Revendications

1. Procédé de fabrication d'une batterie secondaire au lithium (100) comprenant une électrode positive (140), une électrode négative (110) et un séparateur (130), comprenant :
une étape consistant à appliquer un électrolyte en gel (120) sur une certaine des surfaces du séparateur, et
une étape consistant à former l'électrode négative sur la surface de l'électrolyte en gel, dans lequel :
l'électrolyte en gel comprend un polymère, un électrolyte et un solvant, dans lequel la teneur du polymère est de 5 à 90 parties en masse sur la base de 100 parties en masse de l'électrolyte en gel, et la teneur de la solution d'électrolyte composée de l'électrolyte et du solvant est de 10 à 95 parties en masse sur la base de 100 parties en masse de l'électrolyte en gel,
**caractérisé en ce que** l'électrode négative est plus mince que l'électrolyte en gel et la teneur d'un matériau actif d'électrode négative dans l'électrode négative est de 10 % en masse ou moins sur la base de la quantité totale d'électrode négative.

2. Procédé de fabrication d'une batterie secondaire au lithium (100) selon la revendication 1, dans lequel l'électrode négative (110) présente une épaisseur de 0,5 µm ou plus et de 6,0 µm ou moins.

3. Procédé de fabrication d'une batterie secondaire au lithium (100) selon la revendication 1 ou 2, dans lequel l'électrolyte en gel (120) comprend au moins un choisi dans le groupe comprenant oxyde de polyéthylène, oxyde de polypropylène, polytétrafluoroéthylène, polychlorotrifluoroéthylène, copolymère de tétrafluoroéthylène/hexafluoropropylène, copolymère de fluorure de vinylidène/hexafluoropropylène, copolymère de tétrafluoroéthylène/perfluoro(alkylvinyléther), copolymère de tétrafluoroéthylène/éthylène, copolymère de chlorotrifluoroéthylène/éthylène, fluorure de polyvinylidène et fluorure de polyvinyle, et des dérivés de ceux-ci.

4. Procédé de fabrication d'une batterie secondaire au lithium (100) selon l'une quelconque des revendications 1 à 3, dans lequel l'électrolyte en gel (120) comprend, en tant que solvant, un composé choisi dans le groupe constitué de 1,1,2,2-tétrafluoroéthyl-2,2,3,3-tétrafluoropropyl éther, 1,1,2,2-tétrafluoroéthyl-2,2,2-trifluoroéthyl éther, tétrafluoroéthyl tétrafluoropropyl éther, méthyl nonafluorobutyl éther, éthyl nonafluorobutyl éther, 1,1,1,2,2,3,4,5,5,5-décafluoro-3-méthoxy-4-trifluorométhylpentane, méthyl 2,2,3,3,3-pentrafluoropropyl éther, 1,1,2,3,3-hexafluoropropyl méthyl éther et éthyl 1,1,2,3,3,3-hexafluoropropyl éther.

5. Procédé de fabrication d'une batterie secondaire au lithium (100) selon l'une quelconque des revendications 1 à 4, dans lequel l'électrolyte en gel (120) présente une épaisseur de 6 µm ou plus et de 15 µm ou moins.

6. Procédé de fabrication d'une batterie secondaire au lithium (100) selon l'une quelconque des revendications 1 à 5, dans lequel l'étape de formation de l'électrode négative (110) comprend une étape consistant à fixer un matériau d'électrode négative présentant un papier anti-adhésif à la surface de l'électrolyte en gel (120) et une étape consistant à retirer le papier anti-adhésif.

7. Procédé de fabrication d'une batterie secondaire au lithium (100) selon l'une quelconque des revendications 1 à 5, dans lequel l'étape de formation de l'électrode négative (110) est une étape consistant à former l'électrode négative sur la surface de l'électrolyte en gel (120) par un procédé de dépôt en phase vapeur ou par placage.

8. Procédé de fabrication d'une batterie secondaire au lithium (100) selon l'une quelconque des revendications 1 à 7, comprenant en outre une étape consistant à appliquer un matériau d'électrode positive contenant l'électrolyte en gel sur l'autre surface du séparateur pour former l'électrode positive (140).

9. Procédé de fabrication d'une batterie secondaire au lithium (100) selon la revendication 8, comprenant en outre une étape consistant à former un collecteur de courant d'électrode positive présentant une épaisseur de 1,0 µm ou plus et de 6,0 µm ou moins sur une surface de l'électrode positive.

10. Procédé de fabrication d'une batterie secondaire au lithium (100) selon la revendication 9, dans lequel l'étape de formation du collecteur de courant d'électrode positive (150) comprend une étape consistant à fixer un matériau de collecteur de courant d'électrode positive présentant un papier anti-adhésif à la surface de l'électrode positive, et une étape consistant à retirer le papier anti-adhésif.

11. Procédé de fabrication d'une batterie secondaire au lithium (100) selon la revendication 9, dans lequel l'étape de formation du collecteur de courant d'électrode positive (150) est une étape consistant à former le collecteur de courant d'électrode positive sur la surface de l'électrode positive (140) par un procédé de dépôt en phase vapeur ou par placage.

12. Batterie secondaire au lithium (100) comprenant une électrode positive, une électrode négative (110) et un séparateur (130), dans laquelle :
le séparateur présente, sur l'une de ses surfaces, un électrolyte en gel (120) formé par application, dans laquelle l'électrolyte en gel comprend un polymère, un électrolyte et un solvant, et la teneur du polymère est de 5 à 90 parties en masse sur la base de 100 parties en masse de l'électrolyte en gel, et la teneur de la solution d'électrolyte composée de l'électrolyte et du solvant est de 10 à 95 parties en masse sur la base de 100 parties en masse de l'électrolyte en gel,
l'électrolyte en gel présente, sur une surface de celui-ci, l'électrode négative, et
**caractérisé en ce que** l'électrode négative est plus mince que l'électrolyte en gel et la teneur d'un matériau actif d'électrode négative dans l'électrode négative est de 10 % en masse ou moins sur la base de la quantité totale d'électrode négative.

13. Batterie secondaire au lithium (100) selon la revendication 12, dans laquelle l'électrode négative (110) présente une épaisseur de 0,5 µm ou plus et de 6,0 µm ou moins.

14. Batterie secondaire au lithium (100) selon la revendication 12 ou 13, dans laquelle l'électrolyte en gel (120) comprend au moins un choisi dans le groupe comprenant oxyde de polyéthylène, oxyde de polypropylène, polytétrafluoroéthylène, polychlorotrifluoroéthylène, copolymère de tétrafluoroéthylène/hexafluoropropylène, copolymère de fluorure de vinylidène/hexafluoropropylène, copolymère de tétrafluoroéthylène/perfluoro(alkylvinyléther), copolymère de tétrafluoroéthylène/éthylène, copolymère de chlorotrifluoroéthylène/éthylène, fluorure de polyvinylidène et fluorure de polyvinyle, et des dérivés de ceux-ci.

15. Batterie secondaire au lithium (100) selon l'une quelconque des revendications 12 à 14, dans laquelle l'électrolyte en gel (120) contient, en tant que solvant, un composé choisi dans le groupe constitué de 1,1,2,2-tétrafluoroéthyl-2,2,3,3-tétrafluoropropyl éther, 1,1,2,2-tétrafluoroéthyl-2,2,2-trifluoroéthyl éther, tétrafluoroéthyl tétrafluoropropyl éther, méthyl nonafluorobutyl éther, éthyl nonafluorobutyl éther, 1,1,1,2,2,3,4,5,5,5-décafluoro-3-méthoxy-4-trifluorométhylpentane, méthyl 2,2,3,3,3-pentrafluoropropyl éther, 1,1,2,3,3,3 -hexafluoropropyl méthyl éther et éthyl 1,1,2,3,3,3-hexafluoropropyl éther.

16. Batterie secondaire au lithium (100) selon l'une quelconque des revendications 12 à 15, dans laquelle l'électrolyte en gel (120) présente une épaisseur de 6 µm ou plus et de 15 µm ou moins.

17. Batterie secondaire au lithium (100) selon l'une quelconque des revendications 12 à 16, dans laquelle le séparateur (130) présente, sur son autre surface, une électrode positive (140) contenant l'électrolyte en gel (120).

18. Batterie secondaire au lithium (100) selon la revendication 17, comprenant en outre un collecteur de courant d'électrode positive (150) présentant une épaisseur de 1,0 µm ou plus à 6,0 µm ou moins sur l'électrode positive (140) contenant l'électrolyte en gel (120).
